Europäisches Patentamt

(19) European Patent Office

Office européen des brevets

(11) Numéro de publication: **0 202 968**
**B1**

(12) **FASCICULE DE BREVET EUROPEEN**

(45) Date de publication du fascicule du brevet:
**28.06.89**

(51) Int. Cl.⁴: **F16D 3/20**, F16D 3/06,
F16C 31/04, F16D 3/16

(21) Numéro de dépôt: **86400765.3**

(22) Date de dépôt: **09.04.86**

(54) **Joint homocinétique coulissant, notamment pour transmission latérale de véhicule.**

(30) Priorité: **19.04.85  FR 8505995**

(43) Date de publication de la demande:
**26.11.86 Bulletin 86/48**

(45) Mention de la délivrance du brevet:
**28.06.89 Bulletin 89/26**

(84) Etats contractants désignés:
**DE FR GB IT**

(56) Documents cités:
**DE-A- 2 952 029**
**FR-A- 2 164 033**
**FR-A- 2 476 251**
**FR-A- 2 506 872**
**FR-A- 2 512 140**
**FR-A- 2 554 528**

(73) Titulaire: **GLAENZER SPICER, 10 Rue J.P. Timbaud,
F-78301 Poissy(FR)**

(72) Inventeur: **Orain, Michel Alexandre, 10 rue des Côtes de
Vannes, F-78700 Conflans Ste Honorine(FR)**

(74) Mandataire: **Moncheny, Michel et al, c/o Cabinet
Lavoix 2 Place d'Estienne d'Orves, F-75441 Paris
Cedex 09(FR)**

## Description

La présente invention concerne les joints homocinétiques coulissants pouvant être utilisés notamment dans des transmissions latérales de véhicules automobiles a traction avant ou à propulsion à roues indépendantes.

On sait que les moteurs à explosion sont le siège de vibrations d'amplitudes variables dans une large bande de fréquence de l'ordre de 30 à 300 hertz. Un joint homocinétique coulissant devrait, non seulement transmettre le couple sous angle et à élongations variables, mais aussi être infiniment perméable axialement, aussi bien pour un angle nul que sous l'angle maximal d'utilisation, de manière à empêcher les composantes axiales des vibrations du moteur de cheminer vers la roue motrice et la structure du véhicule. Enfin, il ne devrait pas lorsqu'il fonctionne sous angle, introduire lui-même d'excitation axiale périodique susceptible d'amorcer des vibrations dans la structure du véhicule.

Or, par suite des frottements de fonctionnement dont l'amplitude varie cycliquement, les joints homocinétiques coulissants connus présentent les inconvénients suivants :

Les moments perpendiculaires à l'axe de rotation, engendrés par les frottements, varient périodiquement et créent des excitations correspondantes pouvant provoquer des résonances dans la structure du véhicule ou dans l'arbre de transmission lui-même.

Ces variations périodiques de frottement résultent du mode de déplacement des corps roulants, qui, suivant l'angle de phase considéré, roulent ou glissent sous forte charge, amenant ainsi de très fortes fluctuations dans le moment résultant. Un tel fonctionnement où un même corps roulant (telle une bille) passe du roulement pratiquement pur à un glissement total se différencie totalement de celui du roulement à billes dans lequel le taux de glissement est faible et pratiquement constant.

On connaît, d'après le document FR-A 2 506 872, un joint homocinétique coulissant qui vise à remédier aux inconvénients énoncés ci-dessus et qui propose diverses variantes qui présentent toutes la particularité de comporter trois paires de plans de roulement régulièrement espacées angulairement autour d'un premier axe, les plans de chaque paire étant parallèles entre eux et à ce premier axe, ces plans de roulement coopérant avec des aiguilles interposées entre les paires de plans et des éléments intermédiaires, par ailleurs en contact par des portées sphériques complémentaires avec des tourillons régulièrement espacés angulairement et s'étendant radialement par rapport à l'axe d'un deuxième organe.

Un tel joint qui correspond au préambule de la revendication 1 constitue un progrès notable mais on a pu noter que lors du fonctionnement sous angle, les aiguilles sont amenées à glisser dans leur plan, de sorte qu'il est nécessaire de prévoir des moyens pour les retenir latéralement, ce qui complique quelque peu la fabrication. De plus, des frottements se produisent entre les extrémités des aiguilles et les moyens de retenue, ce qui est bien entendu défavorable.

On connaît également d'après le document FR 2 512 140 un joint comportant des galets montés coulissants sur des tourillons cylindriques, ainsi que des sabots intermédiaires disposés entre les galets et les chemins de roulement du deuxième organe. Ces chemins de roulement sont constitués par des surfaces cylindriques, de section à peu près circulaire et de génératrices parallèles à l'axe de ce deuxième organe et reçoivent des billes qui coopèrent avec des surfaces complémentaires prévues sur les sabots.

Comme dans le joint décrit dans le document FR-A 2 506 872 et défini succinctement ci-dessus, l'invention se propose de réaliser un joint homocinétique coulissant téléscopique, dans lequel les vibrations provenant de l'organe moteur soient filtrées et qui soit de plus exempt ou pratiquement exempt de frottements internes périodiques. Au contraire, l'objectif recherché est d'obtenir un moment de frottement constant en grandeur et en direction, ainsi qu'un coulissment à très grande liberté quel que soit l'angle sous lequel fonctionne le joint, ce dernier devant de plus ne pas engendrer de sollicitations axiales périodiques. De plus, les inconvénients spécifiques dus à la présence d'aiguilles doivent également être éliminés.

A cet effet, l'invention a pour objet un joint homocinétique comprenant un premier organe orienté suivant un premier axe et portant trois bras radiaux régulièrement espacés angulairement et délimitant des portées sphériques, un deuxième organe ayant un deuxième axe sécant avec le premier et pouvant former un angle avec lui, ce deuxième organe délimitant trois paires de chemins de roulement, des éléments intermédiaires disposés entre lesdites portées sphériques et lesdits chemins de roulement, des éléments de roulement étant interposés entre les éléments intermédiaires et les chemins de roulement adjacents, caractérisé en ce que les chemins de roulement prévus sur le deuxième organe sont des surfaces cylindriques de section à peu près circulaire et de génératrices parallèles à l'axe du deuxième organe, chaque élément intermédiaire comporte sur sa face dirigée vers le chemin de roulement adjacent un chemin de roulement analogue, c'est-à-dire de forme à peu près cylindrique, ayant une section transversale circulaire et des génératrices parallèles à l'axe du deuxième organe, les éléments de roulement interposés entre les éléments intermédiaires et les chemins de roulement étant des billes.

Suivant d'autres caractéristiques:

– en fonctionnement sous angle, chaque élément intermédiaire est animé d'un mouvement d'oscillation autour de l'axe des chemins de roulement associés;

– les éléments intermédiaires sont des barrettes délimitant sur une face une portée sphérique coopérant avec la portée sphérique complémentaire du premier organe et sur une face opposée un chemin de roulement pour les éléments de roulement;

– les billes interposées entre un élément intermédiaire et le chemin de roulement adjacent sont maintenues par une cage;

- ladite cage comporte des moyens de butée de fin de course coopérant avec des surfaces d'extrémité des éléments intermédiaires;
- chaque cage comporte des moyens de retenue des billes, du côté opposé au chemin de roulement du deuxième organe;
- il est prévu des moyens astreignant chaque cage à parcourir la moitié du chemin effectué par le centre d'une surface de portée sphérique du premier organe;
- ces moyens comprennent un engrenage tourillonnant sur un pivot porté latéralement par la cage et en prise avec deux crémaillères portées respectivement par l'élément intermédiaire et par le deuxième organe;
- chaque élément intermédiaire délimite un chemin de roulement séparé en deux positions par une paroi intermédiaire;
- chaque élément intermédiaire comporte un chemin de roulement divisé en au moins deux segments recevant chacun au moins une bille, chaque segment étant terminé à ses deux extrémités par une paroi à peu près sphérique se raccordant à la surface cylindrique du segment de chemin de roulement adjacent.

L'invention va être décrite plus en détail ci-dessous en se référant aux dessins annexés, donnés uniquement à titre d'exemples et sur lesquels :

- la Fig. 1 est une vue en coupe transversale d'un premier mode de réalisation d'un joint suivant l'invention, correspondant à une ligne de coupe 1-1 sur la Fig. 2 ;
- la Fig. 2 est une vue en coupe suivant la ligne 2-2 de la Fig. 1 ;
- la Fig. 3 est une vue en coupe et suivant la ligne 3-3 de la Fig. 2 ;
- la Fig. 4 est une vue de détail suivant la flèche F$_4$ de la Fig. 1 ;
- la Fig. 5 est une vue partielle en coupe transversale d'une variante ;
- la Fig. 6 est une vue de dessous suivant la flèche F$_6$ de la Fig. 5 ;
- la Fig. 7 est une vue de dessus d'une barrette à crémaillère utilisée dans le mode de réalisation des Fig. 5 et 6 ;
- la Fig. 8 est une vue en coupe longitudinale d'une autre variante ;
- la Fig. 9 est une vue partielle en coupe suivant la ligne 9-9 de la Fig. 8 ;
- la Fig. 10 est une vue partielle en coupe représentant une autre variante.

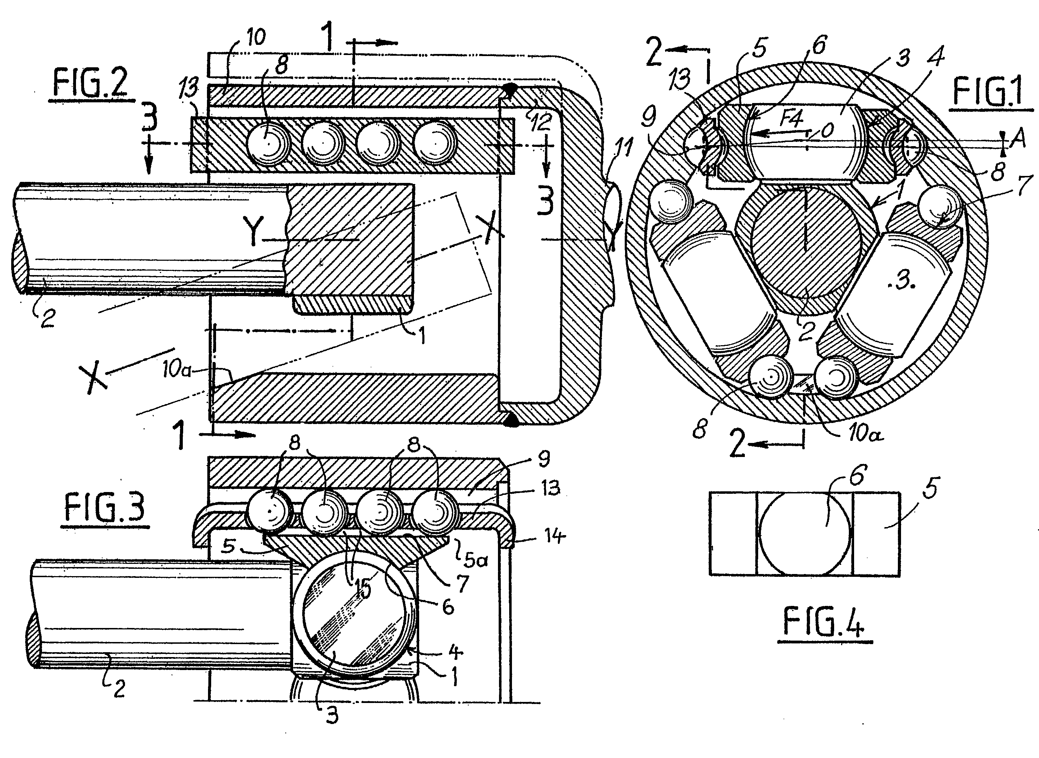

Le joint représenté aux Fig. 1 à 4 comprend un tripode 1 rendu solidaire d'un arbre 2 d'axe X-X par des cannelures, par soudure, ou par tout autre moyen. Ce tripode porte trois bras ou tourillons radiaux 3, régulièrement espacés angulairement et qui délimitent des surfaces latérales sphériques convexes 4 constituant des surfaces de portée pour des éléments intermédiaires ou barrettes 5 pouvant osciller sur ces surfaces de portée. A cet effet les barrettes délimitent des portées sphériques concaves 6 complémentaires des portées sphériques convexes des tourillons. Elles comportent par ailleurs chacune sur leur face opposée une gorge cylindrique longitudinale 7, de section circulaire servant de chemin de roulement à un chapelet de billes 8. Chaque série de billes roule par ailleurs sur un chemin de roulement 9 ménagé à l'intérieur d'un fût ou barillet 10 d'axe Y-Y. Les six chemins de roulement ménagés dans ce barillet ont une forme cylindrique, de section à peu près circulaire, de rayon égal au rayon des billes ou légèrement supérieur à ce rayon, et de génératrices parallèles à l'axe Y-Y.

Chaque série de billes disposée entre une barrette 5 et un chemin de roulement 9 du barillet est maintenue, dans cette variante, par une cage 13 qui peut être réalisée par exemple en matière plastique et dont les extrémités longitudinales se terminent par un rebord 14 dirigé à peu près radialement vers l'axe Y-Y et qui servent de butée de fin de course, coopérant avec les extrémités longitudinales 5a des barrettes 5.

De plus, les logements de ces cages dans lesquels sont reçues les billes sont conformés, par exemple en forme de tronc de cône en 15, pour assurer la retenue des billes vers l'intérieur lorsque ces dernières ne se trouvent plus en face de la gorge adjacente.

Le diamètre de ces billes peut être plus grand, de 10 à 100 microns, pour les deux billes situées à chaque extrémité de la cage afin de réaliser un rappel de centrage des billes, et de mieux répartir la charge sur l'ensemble des billes selon l'enseignement du brevet FR-A 2 554 528.

De façon connue, le barillet 10 peut être rendu solidaire d'un deuxième arbre 11, et être soudé sur un épanouissement 12 de cet arbre.

En fonctionnement, lorsque le joint fonctionne sous angle, tout en étant fermement maintenu radialement par rapport au barillet, le tripode 1 et par conséquent l'arbre 2 ont toute liberté de débattement angulaire et axial. Les légers déplacements axiaux des trois sphères portées par le tripode, accompagnant la rotation sous angle, sont accommodés par une légère oscillation de chaque barrette 5 autour de l'axe du chemin de roulement correspondant. Ce mode de fonctionnement des billes est tout à fait original et ne se retrouve pas, en particulier, dans les coulisses à billes utilisées dans de nombreuses applications mais qui sont toujours animées d'un mouvement de translation pur.

Le mouvement radial des sphères étant trois fois plus important vers l'intérieur que vers l'extérieur, on peut, suivant une caractéristique avantageuse de l'invention, prévoir une compensation A de l'ordre de 0,3 mm, consistant en un déport du centre 0 de la sphère 3 au-dela de la ligne joignant les axes des chemins de roulement en vis-à-vis, dans une section radiale, et par conséquent associés à la même sphère 3. Ainsi la modification du jeu ou du serrage sur les éléments roulants équipant un tourillon, par suite de la modification d'obliquité de la ligne des centres due à la variation de A n'excéde pas 0,015 mm.

Suivant d'autres avantages:
- les éléments roulants (billes) se guident d'eux-mêmes latéralement dans leurs deux chemins de roulement, tant sur le barillet que sur les éléments intermédiaires. Les éléments intermédiaires sont donc guidés en direction et en translation selon les trois axes et à tout instant par le seul contact roulant des billes. Il en résulte qu'il n'y a pas lieu de guider la cage et qu'il ne risque donc pas d'apparaître de frottements parasites. De plus, comme il n'existe pas de guidage par frottement, il n'existe pas non plus de jeu de guidage directionnel de la cage et des éléments roulants et donc tout roulement biais est supprimé. En d'autres termes, les billes ont leurs axes de rotation toujours exactement perpendiculaires à l'axe des chemins de roulement, ce qui correspond au roulement le plus pur;

— par suite de l'absence du talon de guidage latéral des cages, ce type de barillet autorise un plus grand débattement angulaire de l'arbre coulissant (voir Fig. 2);

— le barillet est de construction très simple et les risques de frottement latéraux sont supprimés, ce qui réduit encore la trainée axiale de ce joint lors du coulissement sous couple;

— le cercle inscrit à l'intérieur du barillet est plus grand que dans le cas du brevet FR-A 2 506 872, pour un même diamètre extérieur, ce qui procure un plus grand coulissement, toutes choses égales par ailleurs;

— enfin, les corps roulants sont plus gros et moins nombreux que dans le cas d'utilisation d'aiguilles, ce qui tend à améliorer la robustesse.

Afin d'accroître la longueur du coulissement en compression lorsque le joint fonctionne sous angle, il est prévu un chanfrein 10a à l'extrémité du barillet, dans les zones comprises entre deux chemins de roulement adjacents. Ce chanfrein fournit un dégagement supplémentaire au débattement de l'arbre 2.

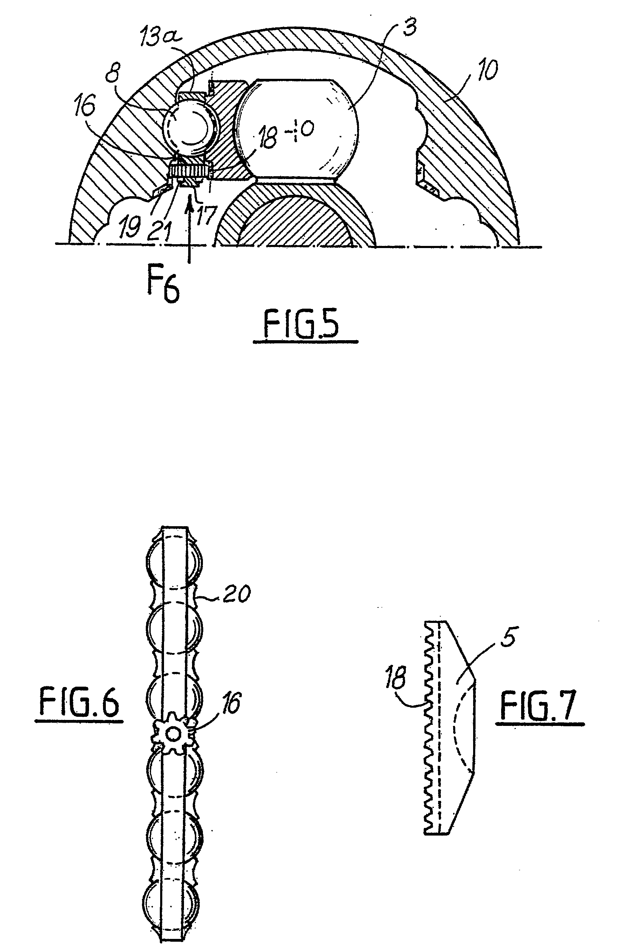

Dans la variante représentée aux Fig. 5 à 7, il est prévu des moyens pour astreindre la cage 13a associée à chaque chapelet de billes 8, à parcourir la moitié du chemin effectué par le centre 0 de la sphère du tripode associé. Ces moyens comprennent un petit pignon 16 tourillonnant sur un pivot 17 porté latéralement par la cage 13a. Ce pignon est en prise avec deux crémaillères 18, 19 portées respectivement, par la barrette 5 et le barillet 10.

La cage peut être réalisée en une matière plastique résistante, tel que le Nylon ou bien en métal. Des excroissances 20 (Fig. 6) venues de moulage ou repoussées après montage retiennent les billes lorsqu'elles se trouvent en dehors des chemins de roulement, comme décrit à propos de la première variante. Un circlips 21 ou tout autre moyen connu permet de retenir le pignon sur son pivot.

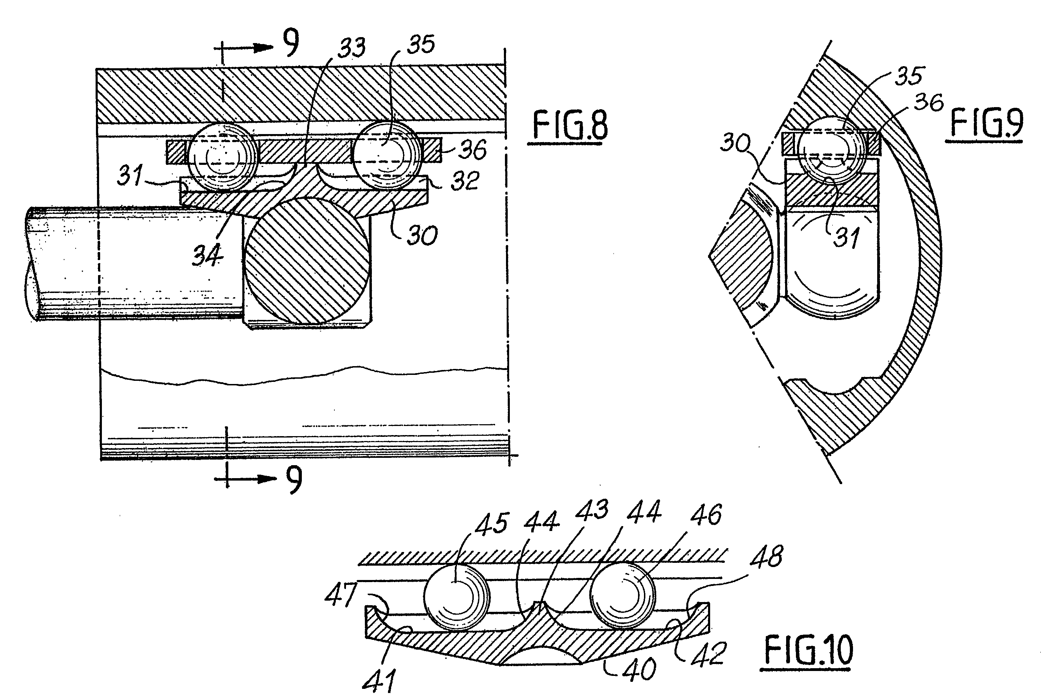

Dans le mode de réalisation des Fig. 8 et 9, chaque barrette 30 comporte un chemin de roulement divisé en deux tronçons ou segments 31, 32 par une paroi intercalaire 33 comportant deux surfaces concaves sphériques 34 de même rayon que les billes et qui se raccordent à la section cylindrique des chemins de roulement. Dans l'exemple représenté, il est prévu une bille 35 de chaque côté de cette paroi, et les deux billes sont maintenues par une cage 36 qui assure un écartement constant des billes et empêche leur désemparement aux extrémités des chemins de roulement 31,32.

A l'extrémité de la course de roulement, dans un sens ou dans l'autre, l'une des billes vient épouser l'une des surfaces concaves 34. Il se produit alors un glissement entre les surfaces sphériques complémentaires grâce au film de lubrifiant emprisonné, tandis que la bille roule sur le chemin de roulement du barillet. Ainsi, lorsqu'un excédent de coulissement est nécessaire, il s'opère sans grande opposition, même sous couple et sans risque de coincement ni de blocage par arc-boutement.

Dans une autre variante représentée à la Fig. 10, la cage est supprimée. A cet effet, chaque barrette 40 comporte un chemin de roulement divisé en au moins deux segments 41,42 par une paroi 43 délimitant des surfaces sphériques 44. Dans chaque chemin de roulement se trouve au moins une bille 45,46. Chaque segment est délimité à ses deux extrémités par une paroi sphérique 47,48 de rayon correspondant à celui des billes et qui se raccorde à la surface cylindrique du chemin de roulement.

De tels chemins de roulement peuvent être réalisés économiquement et avec précision par formage à froid.

Dans les deux derniers modes de réalisation décrits ci-dessus, les barrettes sont réalisées de façon à présenter une épaisseur qui décroit progressivement vers leurs extrémités, ce qui leur donne une faculté de déformation élastique en flexion. Du fait de cette flexion en fonctionnement sous couple, un recentrage automatique des billes s'effectue de part et d'autre de la paroi intermédiaire 33,34.

Dans les variantes des Fig. 8 à 10, la charge est répartie isostatiquement sur les douze billes, indépendamment des défauts de forme. Il en résulte un avantage notable sur le plan capacité et longévité. Cette caractéristique n'est obtenue dans aucune coulisse à billes.

Suivant une autre variante, les tourillons sphériques peuvent être constitués par des galet fixés (par exemple emmanchés ou soudés) sur des bras cylindriques.

## Revendications

1. Joint homocinétique comprenant un premier organe (1, 2) orienté suivant un premier axe (X–X) et portant trois bras radiaux (3) régulièrement espacés angulairement et délimitant des portées sphériques (4), un deuxième organe (10) ayant un deuxième axe (Y–Y) sécant avec le premier et pouvant former un angle avec lui, ce deuxième organe délimitant trois paires de chemins de roulement (9), des éléments intermédiaires (5) disposés entre lesdites portées sphériques et lesdits chemins de roulement, des éléments de roulement (8) étant interposés entre les éléments intermédiaires (15) et les chemins de roulement adjacents (9), caractérisé en ce que les chemins de roulement (9) prévus sur le deuxième organe (10) sont des surfaces cylindriques de section à peu près circulaire et de génératrices parallèles à l'axe (Y–Y) du deuxième organe, chaque élément intermédiaire (5) comporte sur sa face dirigée vers le chemin de roulement adjacent un chemin de roulement analogue (7), c'est-à-dire de forme à peu près cylindrique, ayant une section transversale circulaire et des génératrices parallèles à l'axe (Y–Y) du deuxième organe (10), les éléments de roulement interposés entre les éléments intermédiaires et les chemins de roulement (9) étant des billes (8).

2. Joint homocinétique selon la revendication 1, caractérisé en ce qu'en fonctionnement sous angle, chaque élément intermédiaire (5; 30; 40) est animé d'un mouvement d'oscillation autour de l'axe des chemins de roulement associés.

3. Joint homocinétique selon l'une quelconque des revendications 1 et 2, caractérisé en ce que les éléments intermédiaires sont des barrettes (5) délimitant sur une face une portée sphérique (6) coopérant avec la portée sphérique complémentaire (4) du premier organe et sur une face opposée un chemin de roulement (7) pour les éléments de roulement (8).

4. Joint homocinétique selon l'une quelconque des revendications 1 à 3, caractérisé en ce que les billes (8) interposées entre un élément intermédiaire (5) et le chemin de roulement (9) adjacent sont maintenues par une cage (13).

5. Joint homocinétique selon la revendication 4, caractérisé en ce que ladite cage (13) comporte des moyens (14) de butée de fin de course coopérant avec des surfaces d'extrémité (5a) des éléments intermédiaires (5).

6. Joint homocinétique selon la revendication 4, caractérisé en ce que chaque cage (13) comporte des moyens (15) de retenue des billes, du côté opposé au chemin de roulement (8) du deuxième organe.

7. Joint homocinétique selon l'une quelconque des revendications 4 à 6, caractérisé en ce qu'il est prévu des moyens (16–19) astreignant chaque cage à parcourir la moitié du chemin effectué par le centre (0) d'une surface de portée sphérique (4) du premier organe.

8. Joint homocinétique selon la revendication 7, caractérisé en ce que lesdits moyens comprennent un pignon (16) tourillonnant sur un pivot (17) porté latéralement par la cage (13) et en prise avec deux crémaillères (18, 19) portées respectivement par l'élément intermédiaire (5) et par le deuxième organe (10).

9. Joint homocinétique selon l'une quelconque des revendications 1 à 8, caractérisé en ce que chaque élément intermédiaire (30) délimite un chemin de roulement séparé en deux portions (31, 32) par une paroi intermédiaire (33).

10. Joint homocinétique selon la revendication 9, caractérisé en ce que la paroi intermédiaire (33) est raccordée au chemin de roulement cylindrique (31, 32) par des surfaces sphériques (34) de même rayon que les billes (35).

11. Joint homocinétique selon l'une quelconque des revendications 9 et 10, caractérisé en ce que chaque élément intermédiaire (40) comporte un chemin de roulement divisé en au moins deux segments (41, 42) recevant chacun au moins une bille (35), chaque segment étant terminé à ses deux extrémités par une paroi (47, 48) à peu près sphérique se raccordant à la surface cylindrique du segment de chemin de roulement adjacent.

12. Joint homocinétique selon l'une quelconque des revendications précédentes, caractérisé en ce que le centre (0) de chaque portée sphérique (4) est déporté radialement vers l'extérieur par rapport à une ligne joignant les axes des chemins de roulement (9) associés.

13. Joint homocinétique selon l'une quelconque des revendications 3 à 12, caractérisé en ce que les barrettes (5; 30; 40) ont une épaisseur qui décroît depuis leur partie centrale vers leurs extrémités, de façon à présenter une certaine capacité de déformation élastique.

**Claims**

1. A homokinetic joint comprising a first element (1, 2) extending along a first axis (X–X) and bearing three radial arms (3) evenly spaced apart angularly and bounding spherical bearing surfaces (4), a second element (10) having a second axis (Y–Y) intersecting the first axis and capable of forming an angle therewith, such second element defining three pairs of raceways (9), intermediate elements (5) disposed between said spherical bearing surfaces and said raceways, rolling members (8) being interposed between the intermediate elements (15) and the adjacent raceways, characterized in that the raceways (9) provided on the second element (10) are cylindrical surfaces having a substantially circular cross-section and generatrices parallel with the axis (Y–Y) of the second element, each intermediate element (5) comprises on its face directed towards the adjacent raceway a similar raceway (7), i.e., a raceway having a substantially cylindrical shape and a circular cross-section and generatrices parallel with the axis (Y–Y) of the second element (10), the rolling members interposed between the intermediate elements and the raceways (9) being balls (8).

2. A homokinetic joint according to claim 1, characterized in that when the joint operates at an angle, each intermediate element (5; 30; 40) is given an oscillatory movement around the axis of the associated raceways.

3. A homokinetic joint according to either of claims 1 and 2, characterized in that the intermediate elements are bars (5) bounding on one face a spherical bearing surface (6) cooperating with the complementary spherical bearing surface (4) of the first element, and on an opposite face a raceway (7) for the rolling members (8).

4. A homokinetic joint according to any of claims 1 to 3, characterized in that balls (8) interposed between an intermediate element (5) and the adjacent raceway (9) are retained by a cage (13).

5. A homokinetic joint according to claim 4, characterized in that the cage (13) comprises end-of-travel abutment means (14) cooperating with end surfaces (5a) of the intermediate elements (5).

6. A homokinetic joint according to claim 4, characterized in that each cage (13) comprises ball-retaining means (15) on the side opposite the raceway (8) of the second element.

7. A homokinetic joint according to any of claims 4 to 6, characterized in that means (16–19) are provided which constrain each cage to travel through one half of the travel performed by the centre (0) of a spherical bearing surface (4) of the first element.

8. A homokinetic joint according to claim 7, characterized in that said constraining means comprise a gear (16) journalled on a pivot (17) borne laterally by the cage (13) and engaging with two racks (18, 19) borne by the first intermediate element (5) and the second element (10) respectively.

9. A homokinetic joint according to any of claims 1 to 8, characterized in that each intermediate element (30) bounds a raceway divided into two portions (31, 32) by an intermediate wall (33).

10. A homokinetic joint according to claim 9, characterized in that the intermediate wall (33) is connected to the cylindrical raceway (31, 32) by a spherical surface (34) having the same radius as the balls (35).

11. A homokinetic joint according to either of claims 9 and 10, characterized in that each intermediate element (40) comprises a raceway divided into at least two segments (41, 42) each of which receives at least one ball (35), each segment being terminated at both ends by a substantially spherical wall (47, 48) connected to the cylindrical surface of the adjacent raceway.

12. A homokinetic joint according to any of the preceding claims, characterized in that the centre (0) of each spherical bearing surface (4) is radially offset outwardly in relation to a line joining the axes of the associated raceways (9).

13. A homokinetic joint according to any of claims 3 to 12, characterized in that the bars (5; 30; 40) have a thickness which decreases from their central portion towards their ends, so as to have some capacity of resilient deformation.

## Patentansprüche

1. Gleichlaufgelenk, mit einem ersten entsprechend einer ersten Achse (X–X) ausgerichteten Organ (1, 2), das drei in regelmäßigen Winkelabständen angeordnete Radialarme (3) aufweist, die sphärische Flächen (4) bilden, mit einem zweiten Organ (10) mit einer zweiten Achse (Y–Y) die die erste Achse schneidet und mit dieser einen Winkel bilden kann, wobei dieses zweite Organ drei Paare von Laufbahnen (9) bildet, und mit Zwischenelementen (5), die zwischen den besagten sphärischen Flächen und den besagten Laufbahnen angeordnet sind, wobei Walzkörper (8) zwischen den Zwischenelementen (5) und den angrenzenden Laufbahnen (9) eingesetzt sind, dadurch gekennzeichnet, daß die an dem zweiten Organ (10) vorgesehenen Laufbahnen (9) die Form von zylindrischen Flächen mit weitgehend kreisförmigem Querschnitt und zur Achse (Y–Y) des zweiten Organs parallel verlaufenden Mantellinien haben, wobei jedes Zwischenelement (5) auf seiner zur angrenzenden Laufbahn hin gerichteten Fläche eine entsprechende Laufbahn (7), d.h. mit weitgehend zylindrischer Form und kreisförmigem Querschnitt sowie mit parallel zur Achse (Y–Y) des zweiten Organs (10) verlaufenden Mantellinien aufweist, und wobei die zwischen den Zwischenelementen und den Laufbahnen (9) befindlichen Walzkörper die Form von Kugeln (8) aufweisen.

2. Gleichlaufgelenk gemäß Anspruch 1, dadurch gekennzeichnet, daß jedes Zwischenelement (5, 30, 40) beim Betrieb in abgewinkelter Position gemäß einer Schwingbewegung um die Achse der zugehörigen Laufbahnen angetrieben wird.

3. Gleichlaufgelenk gemäß einem der Ansprüche 1 und 2, dadurch gekennzeichnet, daß die Zwischenelemente die Form von Stegen (5) haben, die auf einer Seite eine sphärische Fläche (6) bilden, auf der der Laufbahn (7) für die Wälzlager (8) gegenüberliegenden Seite die mit der ergänzenden sphärischen Fläche (4) des ersten Organs zusammenwirkt.

4. Gleichlaufgelenk gemäß einem der Ansprüche 1–3, dadurch gekennzeichnet, daß die zwischen einem Zwischenelement (5) und der angrenzenden Laufbahn (9) befindlichen Kugeln (8) durch einen Käfig (13) gehalten werden.

5. Gleichlaufgelenk gemäß Anspruch 4, dadurch gekennzeichnet, daß der besagte Käfig (13) Anschlagvorrichtungen (14) enthält, die mit den Außenflächen (5a) der Zwischenelemente (5) zusammenwirken.

6. Gleichlaufgelenk gemäß Anspruch 4, dadurch gekennzeichnet, daß jeder Käfig (13) auf der der Laufbahn (9) des zweiten Organs gegenüberliegenden Seite Haltemittel (15) für die Kugeln enthält.

7. Gleichlaufgelenk gemäß einem der Ansprüche 4–6, dadurch gekennzeichnet, daß Mittel (16–19) vorgesehen sind, die bewirken, daß jeder Käfig die Hälfte des durch den Mittelpunkt (0) einer sphärischen Fläche (4) des ersten Organs zurückgelegten Weges durchläuft.

8. Gleichlaufgelenk gemäß Anspruch 7, dadurch gekennzeichnet, daß die besagten Mittel ein Zahnrad (16) enthalten, das auf einem Zapfen (17) dreht, der seitlich durch den Käfig (13) gehalten wird und in zwei Zahnstangen (18, 19) eingreift, die vom Zwischenelement (5) und vom zweiten Organ (10) getragen werden.

9. Gleichlaufgelenk gemäß der Ansprüche 1–8, dadurch gekennzeichnet, daß jedes Zwischenelement (30) eine durch eine Zwischenwand (33) in zwei Abschnitte (31, 32) geteilte Laufbahn bildet.

10. Gleichlaufgelenk gemäß Anspruch 9, dadurch gekennzeichnet, daß die Zwischenwand (33) mit der zylindrischen Laufbahn (31, 32) durch sphärische Flächen (34) von gleichem Radius, wie ihn die Kugeln (35) aufweisen, verbunden ist.

10. Gleichlaufgelenk gemäß Anspruch 9, dadurch gekennzeichnet, daß die Zwischenwand (33) mit der zylindrischen Laufbahn (31, 32) durch sphärische Flächen (34) von gleichem Radius, wie ihn die Kugeln (35) aufweisen, verbunden ist.

11. Gleichlaufgelenk gemäß einem der Ansprüche 9 und 10, dadurch gekennzeichnet, daß jedes Zwischenelement (40) eine in mindestens zwei Segmente (41, 42) geteilte Laufbahn umfaßt, wobei jede Laufbahn mindestens eine Kugel (35) aufnimmt und jedes Segment an seinen beiden Enden durch eine weitgehend sphärische Wand (47, 48) abgeschlossen wird, die sich an die zylindrische Fläche des angrenzenden Laufbahnsegments anschließt.

12. Gleichlaufgelenk·gemäß einem der vorstehenden Ansprüche, dadurch gekennzeichnet, daß der Mittelpunkt (0) jeder sphärischen Fläche (4) im Verhältnis zu einer Linie, welche die Achsen der zugehörigen Laufbahnen (9) verbindet radial nach außen versetzt ist.

13. Gleichlaufgelenk gemäß einem der Ansprüche 3–12, dadurch gekennzeichnet, daß die Stege der Stäbe (5, 30, 40) von ihrem mittleren Teil aus zu ihren Enden hin geringer wird und so eine bestimmte elastische Verformungsmöglichkeit bildet.

FIG1

FIG.2

FIG.3

FIG.4

EP 0 202 968 B1

F6

FIG.5

FIG.6

FIG.7

FIG.8

FIG.9

FIG.10